Europäisches Patentamt

European Patent Office

Office européen des brevets

(11) Publication number: **0 482 740 A2**

## EUROPEAN PATENT APPLICATION

(21) Application number: **91306299.8**

(22) Date of filing: **11.07.91**

(51) Int. Cl.⁵: **C08L 53/02**, C08L 23/08, B60J 10/00, B60R 13/00

(30) Priority: **26.10.90 GB 9023367**

(43) Date of publication of application:
**29.04.92 Bulletin 92/18**

(84) Designated Contracting States:
**DE ES FR GB IT**

(71) Applicant: **DRAFTEX INDUSTRIES LIMITED**
**3 Glenfinlas Street**
**Edinburgh, EH3 6YY, Scotland(GB)**

(72) Inventor: **Junker, Bernd**
**Otto-Brües-Strasse 4**
**W-4060 Viersen 1(DE)**

(74) Representative: **Foster, David Martyn et al**
**MATHISEN MACARA & CO. The Coach**
**House 6-8 Swakeleys Road**
**Ickenham Uxbridge UB10 8BZ(GB)**

(54) **Thermoplastic materials and products.**

(57) Thermoplastic materials are described for re-
placing soft pvc materials in such applications as
flange finishers and sealing strips in the motor ve-
hicle industry and in cable sheathing, hoses, strips
and other articles. The thermoplastic materials com-
prise a thermoplastic blend of two thermoplastics:
styrol-butadiene-styrol ("SBS") and ethylene-vinyl-
acetate ("EVA") in a ratio varying between 80:20 and
20:80, together with suitable additives such as soft-
eners, fillers, stabilisers, pigments and flame-retar-
dants. The thermoplastic materials are advantageous
in that they do not give off dioxin when burnt.

Fig.1.

The invention relates to thermoplastic materials and products.

Known thermoplastic materials comprise polyvinylchloride (pvc) materials such as soft pvc materials having a Shore A hardness of between 65 and 95. Such materials are used for a wide variety of applications. One such application is for edge protection strips or flange finishers used in the motor vehicle industry. Other applications are for cable sheathing, hoses and other articles. However, a problem arises with the use of such pvc materials when the articles made from them are to be destroyed or scrapped. If such articles are disposed of by burning, the combustion gases may contain the environmentally damaging gas, dioxin. This problem also arises, of course, in the event of an accidental fire involving such an article.

According to the invention, there is provided a thermoplastic material, comprising a thermoplastic blend of styrol-butadiene-styrol ("SBS") and ethylene-vinyl-acetate ("EVA").

Flange finishers for use on motor vehicles and embodying the invention, and materials embodying the invention used in such flange finishers, will now be described, by way of example only, with reference to the accompanying diagrammatic drawings in which:

Figure 1 is a cross-section through one of the flange finishers; and

Figure 2 is a cross-section through another of the flange finishers.

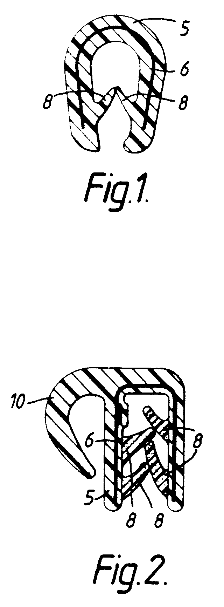

As shown in Figure 1, the flange finisher is channel-shaped in cross-section and comprises thermoplastic material 5 which is extruded over a channel-shaped metal carrier 6. The metal carrier may take any suitable form. For example, it may comprise a series of U-shaped elements joined together by short connecting links, or entirely separated, and arranged side-by-side along the length of the channel. Instead, however, it can comprise wire looped to and fro. However, other forms are possible. The extruded material is also arranged to define gripping lips 8.

In use, the flange finisher is placed over the metal flange surrounding an opening, such as a door opening, in a vehicle body. The lips 8, in conjunction with the resilience of the metal carrier 6, help to retain the flange finisher firmly on the flange. The flange finisher thus protects and decorates the flange.

Figure 2 shows another arrangement in which items corresponding to those in Figure 1 are similarly referenced. In the arrangement of Figure 2, the flange finisher also includes an extended lip 10 which is extruded integrally with the extruded material 5. The lip 10 may be used for weather sealing purposes and/or for embracing the edge of textile or similar trimming material in the vehicle body.

The extruded material 5 is extruded over the metal carrier 6 using a known cross-head extruder.

The extruded material 5 is a thermoplastic blend of two thermoplastics: styrol-butadiene-styrol ("SBS") and ethylene-vinyl-acetate ("EVA"). The ratio of the "SBS" to the "EVA" may vary from 80:20 to 20:80. Various additives may be included, such as softeners, fillers, stabilisers, pigments and flame-retardants.

The "EVA" may contain a proportion of vinyl acetate of between 5 and 45 per cent.

The "SBS" may have a styrol fraction varying between 30 and 55 per cent. In addition, oil-drawn ("ölverstreckter") types may be used.

The result is a thermoplastic material whose qualities (which vary according to the various additives used) are substantially similar to the qualities obtained by using soft pvc materials - but without the risk of producing the dangerous and environmentally damaging dioxin product upon burning.

Suitable softeners comprise phthalic acid esters, adipic acid esters, and softeners based on paraffinic, naphthenic, and aromatic mineral oils, and also polyesters of aliphatic dicarboxylic acid (polymer softeners). Such softeners may be used in various combinations.

Known types of inorganic fillers such as calcium carbonate, siliceous chalks, kaolins and silicates may be used.

Stabilisers may be used for protecting against ageing effects and effects of ultra-violet light.

Known organic dye stuffs and inorganic pigments may be used for colouring.

Expanding (foaming) agents may be incorporated.

The mix may be pre- or partly cross-linked by the addition of cross-linking agents such as peroxides or resins so as to achieve improved elastic properties or greater heat stability.

Chlorine-free flame retardants based on metal hydroxides (such as aluminium hydroxide and manganese hydroxide for example) may be used. Organic bromine compounds could also be used if legally permitted.

The materials described above may be used for the whole of the extruded material 5 in the articles shown in Figures 1 and 2 - that is, not only for the channel-shaped extruding material embedding the metal carrier 6 but also for the clamping lips 8 and (in the case of the Figure 2 arrangement) the extended lip 10. In such a case, however, the material for the gripping lips 8 may be made softer than the material embedding the metal carrier 6 (by appropriate adjustment of the softener additives), the two different-hardness thermoplastics materials being extruded simultaneously using a known "duplex" extruder. In the case of the arrangement of Figure 2, the hardness of the thermoplastic material for the extended lip 10 may also be different, and may be simultaneously extruded using a triplex extruder.

Flange finishers made in this way are readily weldable, gluable and electrostatically flockable.

The material of the gripping lips 8 can instead comprise "SBS" alone (that is without "EVA"), though including also any of the desired additives.

Although the foregoing description has been in relation to flange finishers as illustrated, the thermoplastic materials described may also be used in other applications such as cable sheathing, hoses, strips and other articles.

The flange finishers illustrated may be modified by attaching a soft sealing part to one of the outside walls of the channel. Such a soft sealing part may be made of extruded rubber, advantageously of cellular form. When the flange finisher is placed on the flange around the vehicle opening, the soft sealing part runs along the opening and is positioned so as to be partially compressed by the closure member (for example, the vehicle door) for the opening, thus carrying out a sealing function.

## Claims

1. A thermoplastic material, characterised in that it comprises a thermoplastic blend of styrol-butadiene-styrol ("SBS") and ethylene-vinyl-acetate ("EVA").

2. A material according to claim 1, characterised in that the ratio of "SBS" to "EVA" lies between 80:20 and 20:80 approximately.

3. A material according to claim 1 or 2, characterised in that the "EVA" contains between 5 and 45 per cent, approximately, of vinyl acetate.

4. A material according to any preceding claim, characterised in that the styrol fraction of the "SBS" lies between 30 and 55 per cent approximately.

5. A material according to any preceding claim, characterised by one or more of the following additives: softeners, fillers, stabilisers, pigments and flame-retardants.

6. A material according to claim 5, characterised in that the softeners comprise one or more of the following: phthalic acid esters, adipic acid esters, and softeners based on paraffinic, naphthenic, and aromatic mineral oils, and polyesters of aliphatic dicarboxylic acid.

7. A material according to claim 5 or 6, characterised in that the fillers comprise one or more of the following inorganic fillers: calcium carbonate, siliceous chalks, kaolins and silicates.

8. A material according to any one of claims 6 to 8, characterised in that the or each flame retardant is chlorine-free and based on a metal hydroxide such as aluminium hydroxide or magnesium hydroxide.

9. A material according to any one of claims 1 to 8, characterised in that it is bulked by expanding (foaming) agents.

10. A material according to any one of claims 1 to 8, characterised in that it is pre- or partly cross-linked by the addition of cross-linking agents such as peroxides or resins.

11. An article characterised in that it incorporates thermoplastic material according to any one of claims 1 to 8.

12. A trimming, sealing or finishing strip having a channel-shaped form characterised in that it incorporates thermoplastic material according to any one of claims 1 to 10.

13. A strip according to claim 12, characterised in that the thermoplastic material is extruded over a channel-shaped metal carrier.

14. A strip according to claim 12 or 13, characterised in that the inside walls of the channel carry one or more gripping lips made of said thermoplastic material extruded integrally with the channel-shaped thermoplastic material.

15. A strip according to claim 12 or 13, characterised in that the inside walls of the channel carry one or more gripping lips made of thermoplastic material extruded integrally with the channel-shaped thermoplastic material, the thermoplastic material for the gripping lips consisting of styrol-butadiene-styrol ("SBS").

16. A strip according to claim 15, characterised in that the "SBS" material of the gripping lips includes one or more of the following additives: softeners, fillers, stabilisers, pigments and flame-retardants.

Fig.1.

Fig.2.